# EUROPEAN PATENT SPECIFICATION

(11) **EP 0 923 902 B1**
(45) Date of publication and mention of the grant of the patent: **09.07.2003**
(21) Application number: 98310250.0
(22) Date of filing: 15.12.1998
(51) Int. Cl.: A47L 13/20, D04H 13/00, A47L 13/16, D04H 1/08, D04H 3/04

(54) **Cleaning product and production process therefor**
Reinigungsprodukt und Verfahren zu seiner Herstellung
Produit de nettoyage et son procédé de fabrication

(30) Priority: 16.12.1997 JP 34601897
(43) Date of publication of application: 23.06.1999
(73) Proprietor: UNI-CHARM CORPORATION, Kawanoe-shi Ehime-ken (JP)
(72) Inventor: Abe, Kouzou, c/o Res. & Dev. Division, Mitoyo-gun, Kagawa-ken 769-1602 (JP); Kenmochi, Yasihiko, c/o Res. & Dev. Division, Mitoyo-gun, Kagawa-ken 769-1602 (JP); Fujiwara, Masatoshi, c/o Res. & Dev. Division, Mitoyo-gun, Kagawa-ken 769-1602 (JP)
(74) Representative: Parry, Christopher Stephen

(56) References cited:
- EP-A- 0 289 198
- EP-A- 0 774 229
- EP-A- 0 777 997
- US-A- 3 822 435
- PATENT ABSTRACTS OF JAPAN vol. 017, no. 622 (C-1130), 17 November 1993 (1993-11-17) & JP 05 192284 A (DAIWABO CREATE KK), 3 August 1993 (1993-08-03)

## Description

The present invention relates to a cleaning product and a process for producing the same. More particularly, this invention relates to a cleaning product which is excellent in a dust collecting performance and is suitable for a disposable product, and a process for producing the same.

As a cleaning product, sheets made of fibers have been used. Among them, disposable products which are made of non-woven fabrics and used being attached to a cleaning tool such as a cleaning mop have been generally on the market since they can be used simply and conveniently.

Japanese Patent Laid-Open H9-149873 (& EP-A-777997) discloses a method of manufacturing a disposable wiper having brushing portions. In this wiper, a base sheet and tows of fibers oriented in one direction (filament layer) are stacked, in which the base sheet and the filament layer are bonded at a plurality of bonding lines extending over the entire length of the sheet in a direction perpendicular to the direction described above and, further, only the filament layer is cut continuously and linearly over the entire length of the sheet between adjacent bonding lines, to form the brushing portions from the filament layer. The wiper having the brushing portions is excellent in a dust collecting effect and can collect various kinds of dusts ranging from fine dusts to relatively large crumbs. Further, since the tows are used, the wiper can be produced at small cost.

However, when the brushing portions are formed by cutting the filament layer, it is actually difficult to cut only the filament layer while leaving the base sheet as it is. If the cutting size is not exact, the base sheet is cut together with the filament layer to make the wiper in pieces. Accordingly, the manufacturing step is extremely troublesome. Further, the entire strength of the wiper is not enough.

An object of the present invention is to provide a cleaning product excellent in a dust collecting effect, which can be manufactured conveniently at small cost.

The foregoing object of the present invention can be attained in a cleaning product as defined in claim 1. Preferred embodiments of the cleaning product according to the present invention are subject-matter of the dependent claims 2-27.

Further, the cleaning product of the present invention can be obtained by a process for producing a cleaning product comprising the steps as set out in independent claim 28.

Preferred embodiments of the method according to the present invention are subject-matter of the dependent claims 29-41.

Embodiments of the invention are described below with reference to the accompanying drawings, in which:
Fig. 1(A) is a perspective view of an example of a cleaning product according to the present invention, and Fig. 1(B) is an enlarged view for a portion of the cleaning product shown in Fig. 1(A);
Fig. 2 is a perspective view illustrating an example of a cleaning product according to the present invention which is attached to a cleaning tool;
Fig. 3 is a view illustrating an example of production steps for a cleaning product according to the present invention;
Fig. 4(A) is an enlarged fragmentary cross sectional view showing brushing portions of a cleaning product of the present invention, and Fig. 4(B) is an enlarged fragmentary cross sectional view showing brushing portions of a cleaning product of the present invention in a fluffed state;
Figs. 5(A), 5(B) and 5(C) are plan views showing other modifications of the bonding lines and the cutting portions in the cleaning product according to the present invention; and
Fig. 6 is a plan view showing a further modification of the bonding lines and the cutting portions in the cleaning product according to the present invention.
Fig. 7 is a plan view showing another example of the cleaning product according to the present invention.

The present invention will be explained with reference to the drawings.

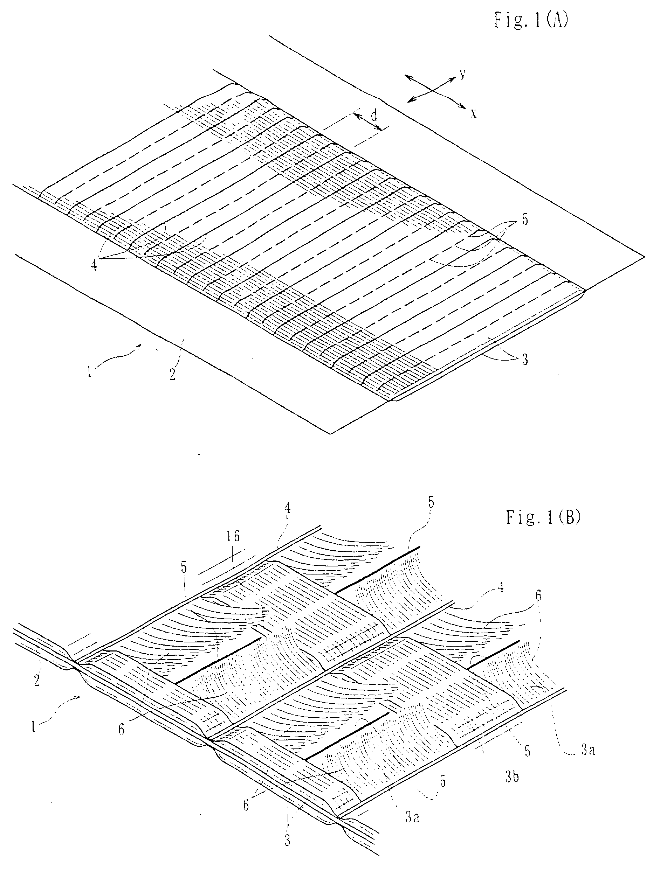

Fig. 1(A) is a perspective view of a cleaning product according to the present invention and Fig. 1(B) is an enlarged view for a portion of the cleaning product shown in Fig. 1(A).

In a cleaning product 1 shown in Fig. 1(A), layers 3 each comprising filaments or split yarns oriented in one direction are stacked on both surface and rear face of a base sheet 2. The filaments or the split yarns constituting the layer 3 are oriented in one direction so as to extend in a direction "x". Then, bonding lines 4 each extending continuously in a direction "y" perpendicular to the direction "x" are disposed having a predetermined distance "d" between each other in the direction "x". The base sheet 2 and the layers 3 are bonded integrally at the bonding lines 4. Then, the base sheet 2 and the layers 3 are cut together at a plurality of cutting portions 5 aligned intermittently in the direction "y" to form intermittent cutting lines extending in the direction "y", as shown in Fig. 1(A). The cutting lines are arranged in a plurality of rows and each row is put between two bonding lines 4 and 4 adjacent with each other. At the portions where the layers 3 are cut, brushing portions 6 are formed as shown in Fig. 1(B).

As described above, since the cleaning product 1 of the present invention has the brushing portions 6, it provides excellent dust collecting effect capable of removing various kinds of dusts ranging from fine dusts to relatively large crumbs.

As shown in Fig. 1(B), in the cleaning product 1, a layer 3b comprising uncut filaments or split yarns remains between adjacent layers 3a and 3a each comprising cut filaments or split yarns that form the brushing portions 6. Hereinafter, the layer 3b is referred to as an uncut portion. The strength of the cleaning product 1 is maintained by the presence of the uncut portions.

In the border region between the brushing portion 6 and the uncut portion, the cross sectional portion 16 of the layer 3 is exposed. Furthermore, a gap having an entrance is preferably formed between the uncut portion and the base sheet 2.

With such structure, when a surface to be cleaned is wiped, the gap functions like a pocket to capture dust. More particularly, when the surface to be cleaned is wiped, dust is caught by the cross sectional portion 16 and comes into the gap between the uncut portion and the base sheet 2. Particularly, even relatively large dust which is difficult to be captured by the conventional cleaning product can be captured in the gap. The captured dust is held among the filaments or split yarns forming the uncut portion and accordingly it is difficult that dust is dispersed around in the wiping operation. Further, since dirt or dust comes into the gap, the dirt is attached to the inside of the layer 3b (portion near to the base sheet 2). That is, not only the filaments or split yarns exposed to the surface of the cleaning product 1 become dirty by capture of dust but also the filaments or split yarns within the layer 3b become dirty. Accordingly, a multiplicity of filaments or split yarns constituting the layer 3b participate in the wiping operation of dust, so that a collection amount of dust by the whole cleaning product 1 can be increased. Furthermore, dirt can be scraped off by the cross sectional portion 16 effectively.

Hence, since the cleaning product of the present invention can capture and hold dust not only with the brushing portions 6 but also with the uncut portions, excellent dust collecting effect can be obtained.

As described above, since the brushing portions 6 are not formed over the entire surface of the cleaning product 1 but formed only at the portions where the cutting portions 5 are situated, the area to form the brushing portions 6 can be controlled properly depending on the number and the position of the bonding lines 4 and the cutting portions 5. That is, the area to form the brushing portions 6 can be controlled properly depending on necessity. Incidentally, while the base sheet 2 and the layers 3 are cut together, the cleaning product 1 is not disintegrated in pieces since cutting is conducted intermittently in the direction "y" i.e., partially. In order to improve the dust collecting effect. it is desirable that the dimension of one cutting portion 5 in the direction "y" is larger than the distance between cutting portions 5 and 5 adjacent with each other in the direction "y" (distance in which the cutting portion 5 is not present). This increases the area to form the brushing portions 6.

Any of materials may be used for the base sheet 2 as long as the material has strength sufficient to withstand for use, such as a non-woven fabric formed by a spun bond method, a resin film, a synthetic fiber-containing cloth or the like.

The layer 3 comprising the filaments or the split yarns is formed of a great number of filaments or split yarns by orienting them in one direction and bundling them. The layer 3 may be formed only with the filaments or the split yarns or may be formed with both of the filaments and the split yarns.

The filaments can be formed into a material generally called as a tow, for example, to be used for the layer 3. The tow means a bundle comprising a number of oriented filaments. The filaments are prepared, for example, from polyethylene, polypropylene, nylon, polyester and rayon. Among them, composite fibers comprising polyester as a core component and polyethylene as a sheath component are preferably used.

The split yarns are prepared from a sheet shaped material such as a non-woven fabric or a film by cutting them into a rectangular shape with an extremely small width. Thus obtained rectangular materials i.e., split yarns are further bundled and used for the layer 3. Well-known non-woven fabric or film can be used. The rectangular material is preferably of a shape having such appropriate thickness and width as capable of catching dusts.

The longitudinal size of the filament or the split yarn may be properly controlled as long as the size is greater than the distance between bonding lines 4. 4 adjacent with each other. Further, the filaments may be crimped as required.

The base sheet 2 and the layer 3 preferably contain a thermoplastic resin. In this case, the layer 3 and the base sheet 2 can be bonded by welding such as heat welding using hot emboss roll or ultrasonic welding. In this method, the thermoplastic resin contained in the base sheet 2 and the layer 3 are welded together to form the bonding lines 4. Alternatively, the bonding lines 4 may be formed with adhesives.

The length of bristles of the brushing portions 6 is determined depending on the distance between the bonding line 4 and the cutting portion 5 and the length is preferably 3 mm or more. If the length of the bristles of the brushing portions 6 is larger than the lower limit described above, the effect of catching hairy dusts is improved.

For easy adsorption of the dusts, an oily agent is preferably incorporated in the cleaning product 1 of the present invention. The oily agent includes mineral oils such as paraffin, synthetic oils such as polyolefin and silicone oil. In addition to the oily agent described above, the cleaning product 1 of the present invention can also be incorporated, for example, with those materials such as deodorant, moistening agent, disinfectant and cleaning chemical such as surfactant.

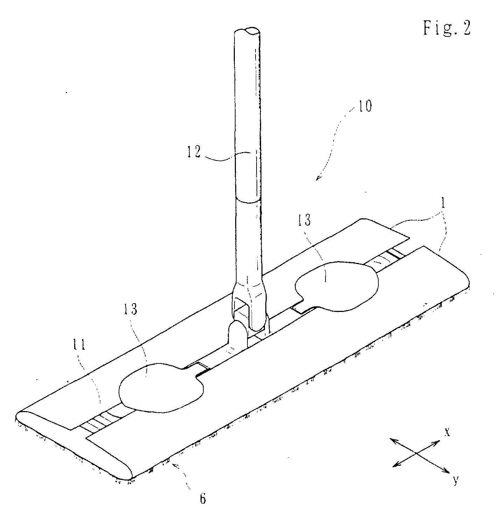

Fig. 2 shows an example of using the cleaning product according to the present invention.

As shown in Fig. 2, the cleaning product 1 can be used being attached to a cleaning mop 10. In the cleaning mop 10, a shank 12 is attached to a cleaning plate 11. The cleaning product 1 of the present invention is applied to the cleaning product 1 in such a manner that the brushing portions 6 are positioned on the lower surface of the cleaning plate 11 to face an object to be cleaned such as a floor, and both sides of the cleaning product 1 are turned on the upper surface of the cleaning plate 11 and held by means of holding clips 13, 13 to the cleaning plates 11. When the cleaning product 1 of the present invention is used in this state, since both the sides of the cleaning product 1 turned on the upper surface of the cleaning plate 11 are not faced to the object to be cleaned, it is not necessary to form the brushing portions 6 on both the sides. Further, when cleaning is carried out by using the cleaning mop 10 to which the cleaning product 1 is attached, sweeping may be conducted either in the direction "x" or the direction "y".

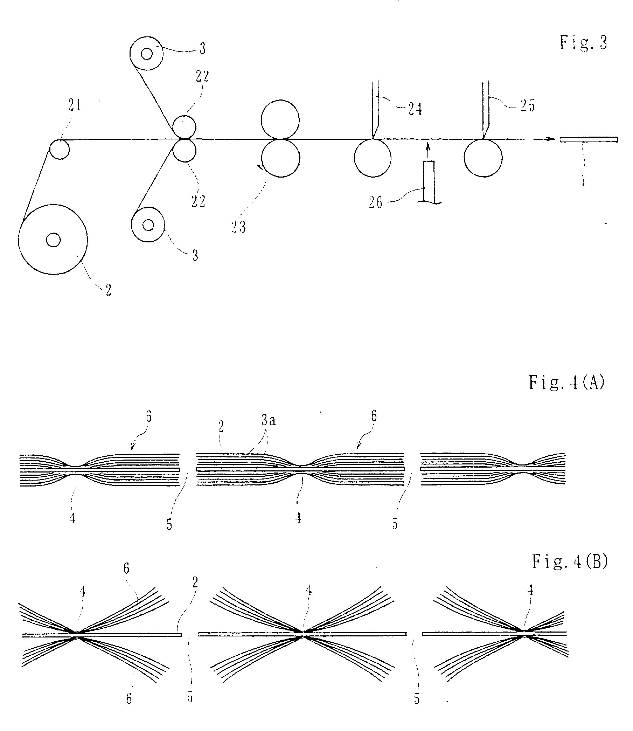

Fig. 3 shows an example of production steps for the cleaning product of the present invention shown in Figs. 1(A) and 1(B)

As shown in Fig. 3, a base sheet 2 wound in a rolled state is at first unwound by a delivery roll 21 and supplied. In the midway of a transportation line of tha supplied base sheet 2, layers 3 comprising filaments or split yarns oriented in one direction are disposed respectively each, for example, in a rolled state, and the layers 3 delivered from the rolls are widened to a predetermined width by widening rolls 22 and stacked on both faces of the base sheet 2 in such a manner that the base sheet 2 is interposed between the layers 3. Then, bonding lines 4 for bonding the base sheet 2 and the layers 3 are formed by a bonding machine 23 to obtain a sheet material comprising the base sheet 2 and the layers 3 integrated together.

The bonding machine 23 has a heat emboss roll. The base sheet 2 and the layers 3 are pressed under heating by the heat emboss roll, and the bonding lines 4 are formed by welding of the thermoplastic resin contained therein. The bonding lines 4 are formed in plurality each being spaced apart by the distance "d" in the direction "x" as shown in Fig. 1(A). Ultrasonic waves may be used instead of the heat emboss roll. They may be bonded by using an adhesive instead of welding. However, the heat welding is convenient and preferred.

Cutting portions 5 are formed by a cutter 24 such that the base sheet 2 and the layers 3 integrated together, namely, the sheet material is cut intermittently in the direction "y" (that is, partially) while being spaced apart at a predetermined distance in the direction "x", as shown in Fig. 1(A), so as to penetrate the sheet material. The cutter 24 has a plurality of teeth which are aligned intermittently. Alternatively, the cutting portions 5 can be formed by fusion cutting the sheet material using heat or ultrasonic waves instead of the cutter 24.

After forming the cutting portions 5, the sheet material is separated into a predetermined length by a second cutter 25, to obtain a cleaning product 1.

Fig. 4(A) is an enlarged fragmentary cross sectional view showing a part of the base sheet 2 and the layers 3 integrated by the bonding machine 23 and partially cut by the cutter 24 in the step of Fig. 3.

The brushing portion 6 is formed from the layer 3a comprising the filaments or split yarns being cut by the cutting portion 5 while being bonded at the bonding line 4 to a part of the base sheet 2 as shown in Fig. 4(A). Incidentally, the filaments or the split yarns constituting the layer 3b (not shown herein) remain uncut as they are.

Furthermore, as shown in Fig. 4(B), the filaments or the split yarns forming the brushing portions 6 may be fluffed. As a step of fluffing, a method of blowing air from an air nozzle 26 to the sheet material before the separating step into a cleaning product 1, as shown in Fig. 3, may be adopted. The brushing portions 6 can be fluffed by air. In the case where the brushing portions 6 are formed on both the faces of the cleaning product 1, air is blown from both of upper and lower sides. Alternatively, mechanical force may be applied to both the faces of the sheet material to cause fluffing after the cutting step by the cutter 24 shown in Fig. 3. Fig. 4(B) shows the fluffed state of the brushing portions 6. The fluffed brushing portions 6 can enhance the dust collecting effect. Incidentally, even if the cleaning product 1 is used for wiping operation with the brushing portions 6 in a not fluffed state as shown in Fig. 4(A), the brushing portions 6 are gradually fluffed in the course of use. Therefore, it is not necessary to previously fluff the brushing portions 6. However, in the case of putting the cleaning product 1 of the present invention as finished goods on the market, the dust collecting effect can be attained immediately upon use and it gives a fine appearance if the brushing portions 6 are fluffed before use.

As has been described above, in the present invention, a cleaning product excellent in the dust collecting effect can be produced simply and conveniently. Namely, since the cutting portions to make the layer comprising the filaments and the like into the brushing portions can be formed by cutting the base sheet together with the layer, no delicate control is required in the cutting step, which can facilitate the production process of the cleaning product. Further, since the cutting portions are formed only partially, high strength can be kept all over the cleaning product. Furthermore, when the layer 3 is formed with the tow, the cleaning product can be produced at small cost.

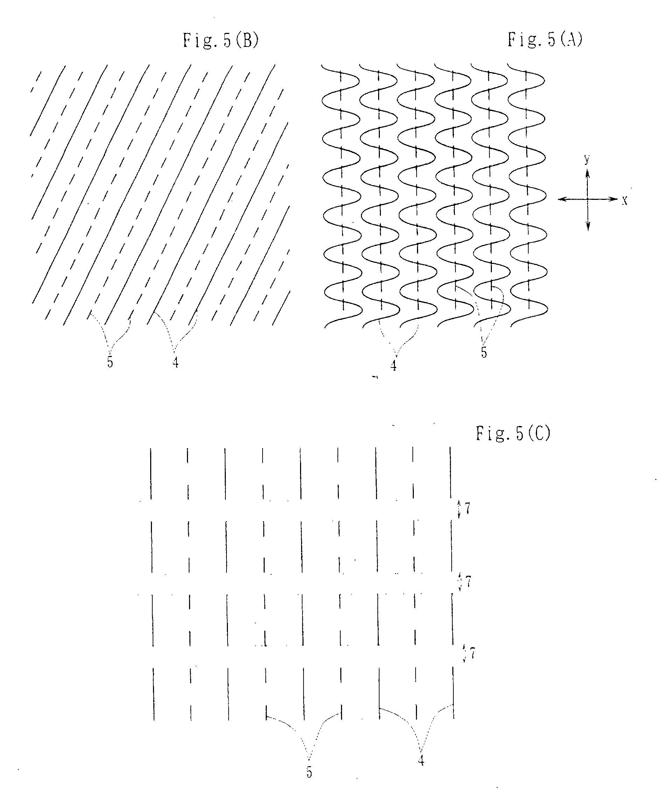

Figs. 5(A), 5(B) and 5(C) are plan views showing other modifications of the bonding lines and the cutting portions in the cleaning product according to the present invention.

In each of Figs. 5(A), 5(B) and 5(C), the filaments or the split yarns extend in the direction "x". In Fig. 5(A), the bonding lines 4 are not linear but corrugated. The cutting portions 5 are formed intermittently while intersecting the corrugating bonding lines 4.

Further, in Fig. 5(B), the bonding lines 4 are disposed in an oblique direction relative to the direction along which the filaments or the split yarns extend (direction "x"). Oblique disposition of the bonding lines 4 provides a merit that the bonding lines 4 can be formed easily in the production process. The cleaning product having the corrugated bonding lines 4 shown in Fig. 5(A) or the oblique bonding lines 4 shown in Fig. 5(B) can easily collect dusts in all directions upon use.

Further, the bonding lines 4 may not necessarily be a continuous line but may be formed intermittently as shown in Fig. 5(C). In this case, it is preferred that the cutting portions 5 are always formed in regions between the bonding lines 4 adjacent in the direction "x" such that the filaments or the split yarns are not detached from the main body of the cleaning product. That is, it is preferred that the cutting portions 5 are not formed in regions 7 in which the bonding lines 4 are not present as shown in Fig. 5(C). Further, the bonding lines may be of a zig-zag shape.

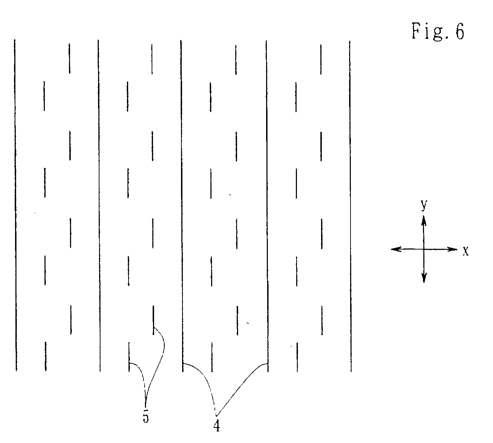

Fig. 6 is a plan view showing still another modification of the bonding lines and the cutting portions of the cleaning product according to the present invention.

As shown in Fig. 6, two cutting lines apart from each other in the direction "x" are positioned between the bonding lines 4 and 4 adjacent with each other, wherein the cutting portions 5 constituting two cutting lines are arranged not to overlap with each other in the direction "y".

Further, the cutting portions may be of any shape as long as the filaments or split yarns are not detached from the main body of the cleaning product by cutting between the bonding lines adjacent with each other. For example, the cutting portion 5 may be formed intermittently so as to form a perforated line or a dotted line, or short cutting portions 5 may be formed at random. Further, the strength of the cleaning product can be adjusted by controlling the place where the cutting portions are formed. The number of cutting lines formed between bonding lines adjacent with each other may be optional.

Further, when the layer 3 is formed with the tow, the layer may be constituted by stacking two or three layers of filaments of different diameters (denier values). Further, a layer comprising filaments of a predetermined denier value and a layer comprising split yarns of a different denier value may be stacked to form the layer. In these cases, it is possible to catch dusts of different sizes effectively by the brushing portions 6.

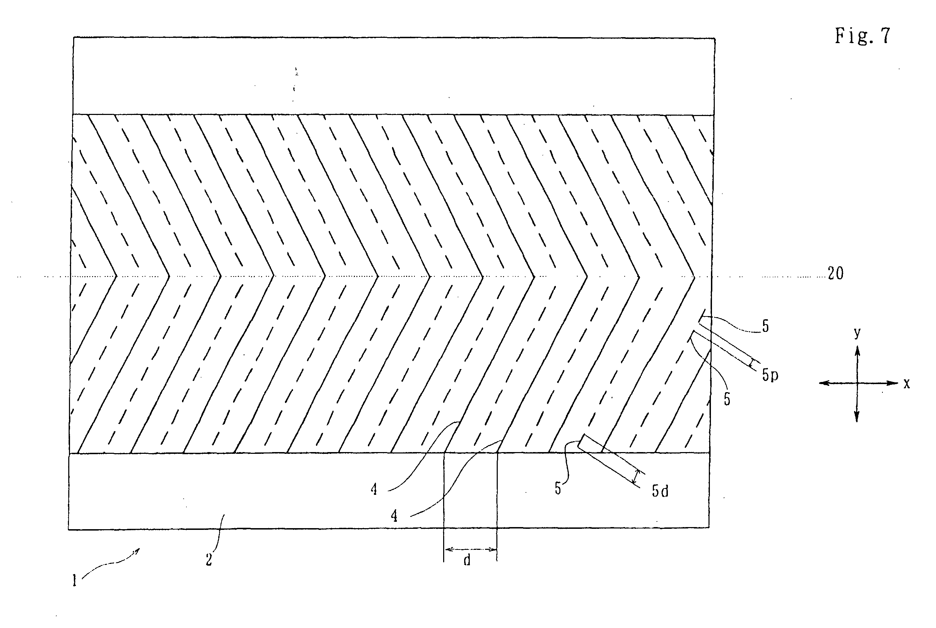

Fig. 7 is a plan view showing another example of the cleaning product according to the present invention. In Fig. 7, the cleaning product has symmetrical pattern of bonding lines and cutting portions shown in Fig. 5(B) about the centerline 20 passing through the center of the cleaning product 1 in the direction "y". When the cleaning product 1 of the present invention is used being attached to a cleaning mop 10, it provides excellent dust collecting effect even if sweeping is conducted in the direction "x", the direction "y" or other directions.

In the present invention, a pitch of the bonding lines, namely, a predetermined distance "d" between the bonding lines 4 adjacent to each other in the direction "x" is preferably 5 - 50 mm. If it is less than 5 mm, the length of the brushing portion 6 is so short that it is difficult to collect dust. If it is more than 50 mm, it is difficult to fluff the brushing portion 6, and the cleaning product 1 has not good appearance. More preferably, the predetermined distance "d" is about 20 mm. A preferable length 5d of the cutting portion 5 is about 4 mm. A preferable interval 5p between the cutting portions 5 is about 1 mm.

In the present invention, furthermore, composite fibers comprising (1) polyethylene terephthalate as a core component and polyethylene as a sheath component, (2) polyethylene terephthalate as a core component and a sheath component, (3) polyethylene terephthalate as a core component and polypropylene as a sheath component, (4) polypropylene as core component and a sheath component or (5) polypropylene as a core component and polyethylene as a sheath component may be used as filaments. A denier of the composite fiber is preferable 1 - 50 d/f, more preferable 2 - 10 d/f.

It is preferable that the base sheet 2 is a spunbond non-woven fabric made of the composite fibers comprising polyethylene terephthalate as a core component and polyethylene as a sheath component, with respect to the strength.

As mentioned above, the cleaning product of the present invention can effectively collect dust and hair by the brushing portions. Further, relatively large crumbs can be caught and retained inside of the layer where uncut filaments or split yarns remains. Accordingly, the relatively large crumbs hardly fall from the cleaning product. And the floor is hardly damaged because the relatively large crumbs caught inside of the layer would not appear at the surface of the cleaning product while wiping the floor. Furthermore, even in the case that the cleaning product is used for wiping of an uneven surface, the brushing portions of the cleaning product can effectively collect dust.

## Claims

1. A cleaning product comprising a base sheet (2) and at least one layer (3) comprising fibers and/or rectangular sheets oriented in one direction, said layer (3) being placed on one face or both faces of said base sheet (2) and bonded thereto at a plurality of bonding lines (4) intersecting said one direction, said base sheet (2) being partially cut together (5) with said layer between said bonding lines (4) to form a plurality of cutting portions (5) such that a plurality of brushing portions (6) are formed at the cutting portions (5) and uncut portions of said layer (3) are formed in portions other than said cutting portions (5).

2. A cleaning product according to claim 1, wherein portions of said layer extending from said bonding lines to said cutting portions in said one direction are raised apart from the surface of said base sheet to form the brushing portions.

3. A cleaning product according to claim 2, wherein said cutting portions are aligned parallel to the bonding lines to form an intermittent line.

4. A cleaning product according to claim 3, wherein said bonding lines and said intermittent lines of the cutting portions extend obliquely with respect to said one direction.

5. A cleaning product according to claim 4, wherein said bonding lines are symmetric about a center line of the cleaning product.

6. A cleaning product according to claim 5, wherein said bonding lines are "V" shaped bonding lines.

7. A cleaning product according to claim 6, wherein said "V" shaped bonding lines and said cutting portions are formed in a center region of the cleaning sheet in a latitudinal direction such that said bonding line and cutting portions are absent from side regions of the cleaning sheet in the latitudinal direction.

8. A cleaning product according to claim 7, wherein a length of each of the cutting portions is longer than an interval between cutting portions adjacent to each other in each of the intermittent lines.

9. A cleaning product according to claim 1, wherein said cutting portions are aligned parallel to the bonding lines to form an intermittent line.

10. A cleaning product according to claim 9, wherein said bonding lines and said intermittent lines of the cutting portions extend obliquely with respect to said one direction.

11. A cleaning product according to claim 10, wherein said bonding lines are symmetric about a center line of the cleaning product.

12. A cleaning product according to claim 11, wherein said bonding lines are "V" shaped bonding lines.

13. A cleaning product according to claim 12, wherein said "V" shaped bonding lines and said cutting portions are formed in a center region of the cleaning sheet in a latitudinal direction such that said bonding line and cutting portions are absent from side regions of the cleaning sheet in the latitudinal direction.

14. A cleaning product according to claim 13, wherein a length of each of the cutting portions is longer than an interval between cutting portions adjacent to each other in each of the intermittent lines.

15. A cleaning product according to claim 1, wherein cutting portions between two bonding lines are located closer to one of said two bonding lines than another of said two bonding lines.

16. A cleaning product according to claim 2, wherein cutting portions between two bonding lines are located closer to one of said two bonding lines than another of said two bonding lines.

17. A cleaning product according to claim 9, wherein cutting portions between two bonding lines are located closer to one of said two bonding lines than another of said two bonding lines.

18. A cleaning product according to claim 1, wherein each of the bonding lines are continuous lines.

19. A cleaning product according to claim 1, wherein each of said plurality of bonding lines is an intermittent line.

20. A cleaning product according to claim 1, wherein each of the bonding lines are corrugated.

21. A cleaning product according to claim 1, wherein said base sheet and said layer contain thermoplastic resin and the bonding lines are formed by welding said base sheet and said layer.

22. A cleaning product according to claim 1, wherein said fibers are crimped.

23. A cleaning product according to claim 1, wherein a distance between adjacent bonding lines is from 5 to 50 millimeters.

24. A cleaning product according to claim 1, wherein a length of portions of said layer extending from said bonding lines to said cutting portions in said one direction is at least 3 millimeters.

25. A cleaning product according to claim 1, wherein said layer contains fibers having different denier values.

26. A cleaning product according to claim 1, wherein said layer contains an oily agent.

27. A cleaning product according to claim 26, wherein said oily agent absorbs dust.

28. A process for producing a cleaning product comprising the steps of:
feeding a base sheet (2) and at least one layer (3) comprising fibers and/or rectangular sheets oriented in one direction and placing said layer (3) on at least one face of said base sheet (2);
bonding said base sheet (2) and said layer (3) together at a plurality of bonding lines (4) intersecting said one direction to obtain a sheet material;
partially cutting said sheet material between the bonding lines (4) to form a plurality of cutting portions (5), thereby forming a plurality of brushing portions (6) at the cutting portions (5), while the other portions of the sheet material remain uncut as they are, and
separating said sheet material to obtain a cleaning product.

29. A process for producing a cleaning product according to claim 28, wherein said cutting step is followed by the step of raising portions of said layer extending from said bonding lines to said cutting portions in said one direction apart from said base sheet to form the brushing portions.

30. A process for producing a cleaning product according to claim 29, wherein said base sheet and said layer contain thermoplastic resin and the bonding lines are formed by heat welding or ultrasonic welding said base sheet and said layer.

31. A process for producing a cleaning product according to claim 28, wherein said base sheet and said layer contain thermoplastic resin and the bonding lines are formed by heat welding or ultrasonic welding said base sheet and said layer.

32. A process for producing a cleaning product according to claim 28, wherein said cutting step is conducted by means of a cutter.

33. A process for producing a cleaning product according to claim 29, wherein said cutting step is conducted by means of a cutter.

34. A process for producing a cleaning product according to claim 30, wherein said cutting step is conducted by means of a cutter.

35. A process for producing a cleaning product according to claim 31, wherein said cutting step is conducted by means of a cutter.

36. A process for producing a cleaning product according to claim 30, wherein said cutting step is conducted by means of fusion cutting using heat or ultrasonic waves.

37. A process for producing a cleaning product according to claim 31, wherein said cutting step is conducted by means of fusion cutting using heat or ultrasonic waves.

38. A process for producing a cleaning product according to claim 28, wherein said layer is made of a tow comprising a plurality of filaments continuously extending in the feeding direction.

39. A process for producing a cleaning product according to claim 29, wherein said layer is made of a tow comprising a plurality of filaments continuously extending in the feeding direction.

40. A process for producing a cleaning product according to claim 30, wherein said layer is made of a tow comprising a plurality of filaments continuously extending in the feeding direction.

41. A process for producing a cleaning product according to claim 31, wherein said layer is made of a tow comprising a plurality of filaments continuously extending in the feeding direction.

## Patentansprüche

1. Reinigungsprodukt bestehend aus einer Trägerbahn (2) und wenigstens einer Schicht (3), die aus Fasern und/oder rechteckigen in einer Richtung orientierten Bahnen besteht, wobei besagte Schicht (3) auf eine Seite oder beide Seiten besagter Trägerbahn (2) platziert und an einer Vielheit von Bindelinien (4), die sich mit besagter einen Richtung schneiden, darauf verklebt wird, besagte Trägerbahn (2) teilweise zusammen (5) mit besagter Schicht zwischen besagten Bindelinien (4) geschnitten wird, um eine Vielheit von Schnittteilen (5) so zu bilden, dass eine Vielheit von Bürstteilen (6) an den Schnittteilen (5) geformt werden und ungeschnittene Teile besagter Schicht (3) in anderen Teilen als besagten Schnitteilen (5) geformt werden.

2. Reinigungsprodukt nach Anspruch 1, worin Teile besagter Schicht, die sich ab besagten Bindelinien zu besagten Schnittteilen in besagter einen Richtung erstrecken, ab der Oberfläche der besagten Trägerbahn angehoben werden, um die Bürstteile zu bilden.

3. Reinigungsprodukt nach Anspruch 2, worin besagte Schnittteile parallel zu den Bindelinien ausgerichtet sind, um eine intermittierende Linie zu formen.

4. Reinigungsprodukt nach Anspruch 3, worin sich besagte Bindelinien und besagte intermittierende Linien der Schnittteile in Bezug auf besagte eine Richtung schräg erstrecken.

5. Reinigungsprodukt nach Anspruch 4, worin besagte Bindelinien um eine Mittellinie des Reinigungsprodukts symmetrisch sind.

6. Reinigungsprodukt nach Anspruch 5, worin besagte Bindelinien "V"-förmige Bindelinien sind.

7. Reinigungsprodukt nach Anspruch 6, worin besagte "V"-förmigen Bindelinien und besagte Schnittteile in einem mittigen Bereich der Reinigungsbahn in einer Längsrichtung so geformt sind, dass besagte Bindelinie und Schnittteile von seitlichen Bereichen der Reinigungsbahn in der
Längsrichtung abwesend sind.

8. Reinigungsprodukt nach Anspruch 7, worin eine Länge jedes der Schnittteile länger als ein Intervall zwischen Schnittteilen ist, die einander in jeder der intermittierenden Linien benachbart sind.

9. Reinigungsprodukt nach Anspruch 1, worin besagte Schnittteile parallel zu den Bindelinien ausgerichtet sind, um eine intermittierende Linie zu formen.

10. Reinigungsprodukt nach Anspruch 9, worin sich besagte Bindelinien und besagte intermittierende Linien der Schnittteile in Bezug auf besagte eine Richtung schräg erstrecken.

11. Reinigungsprodukt nach Anspruch 10, worin besagte Bindelinien um eine Mittellinie des Reinigungsprodukts symmetrisch sind.

12. Reinigungsprodukt nach Anspruch 11, worin besagte Bindelinien "V"-förmige Bindelinien sind.

13. Reinigungsprodukt nach Anspruch 12, worin besagte "V"-förmigen Bindelinien und besagte Schnittteile in einem mittigen Bereich der Reinigungsbahn in einer Längsrichtung so geformt sind, dass besagte Bindelinie und Schnittteile von seitlichen Bereichen der Reinigungsbahn in der Längsrichtung abwesend sind.

14. Reinigungsprodukt nach Anspruch 13, worin eine Länge jedes der Schnittteile länger als ein Intervall zwischen Schnittteilen ist, die einander in jeder der intermittierenden Linien benachbart sind.

15. Reinigungsprodukt nach Anspruch 1, worin Schnittteile zwischen zwei Bindelinien näher an einer von besagten zwei Bindelinien als einer weiteren von besagten zwei Bindelinien positioniert sind.

16. Reinigungsprodukt nach Anspruch 2, worin Schnittteile zwischen zwei Bindelinien näher an einer von besagten zwei Bindelinien als einer weiteren von besagten zwei Bindelinien positioniert sind.

17. Reinigungsprodukt nach Anspruch 9, worin Schnittteile zwischen zwei Bindelinien näher an einer von besagten zwei Bindelinien als einer weiteren von besagten zwei Bindelinien positioniert sind.

18. Reinigungsprodukt nach Anspruch 1, worin jede der Bindelinien kontinuierliche Linien sind.

19. Reinigungsprodukt nach Anspruch 1, worin jede von besagter Vielheit von Bindelinien eine intermittierende Linie ist.

20. Reinigungsprodukt nach Anspruch 1, worin jede der Bindelinien gewellt sind.

21. Reinigungsprodukt nach Anspruch 1, worin besagte Trägerbahn und besagte Schicht thermoplastisches Harz enthalten und die Bindelinien durch Verschweißen besagter Trägerbahn und besagter Schicht geformt werden.

22. Reinigungsprodukt nach Anspruch 1, worin besagte Fasern gekräuselt sind.

23. Reinigungsprodukt nach Anspruch 1, worin ein Abstand zwischen benachbarten Bindelinien von 5 bis 50 Millimeter beträgt.

24. Reinigungsprodukt nach Anspruch 1, worin eine Länge von Teilen besagter Schicht, die sich ab besagten Bindelinien zu besagten Schnittteilen in besagter einen Richtung erstreckt, wenigstens 3 Millimeter beträgt.

25. Reinigungsprodukt nach Anspruch 1, worin besagte Schicht Fasern enthält, die verschiedene Denierwerte haben.

26. Reinigungsprodukt nach Anspruch 1, worin besagte Schicht ein öliges Mittel enthält.

27. Reinigungsprodukt nach Anspruch 26, worin besagtes ölige Mittel Staub absorbiert.

28. Verfahren zur Herstellung eines Reinigungsprodukts, das folgende Schritte umfasst:
Speisen einer Trägerbahn (2) und wenigstens einer Schicht (3), die Fasern und/oder rechteckige Bahnen umfasst, die in einer Richtung orientiert sind, und Platzieren besagter Schicht (3) auf wenigstens eine Seite besagter Trägerbahn (2);
Verbinden besagter Trägerbahn (2) und besagter Schicht (3) an einer Vielheit von Bindelinien (4), die besagte eine Richtung schneiden, um ein Bahnmaterial zu erhalten;
teilweises Schneiden besagten Bahnmaterials zwischen den Bindelinien (4), um eine Vielheit von Schnittteilen (5) zu bilden, dadurch eine Vielheit von Bürstteilen (6) an den Schnittteilen (5) zu formen, während die anderen Teile des Bahnmaterials ungeschnitten wie sie sind bleiben, und
Trennen des besagten Bahnmaterials, um ein Reinigungsprodukt zu erhalten.

29. Verfahren zur Herstellung eines Reinigungsprodukts nach Anspruch 28, worin dem besagten Schritt des Schneidens der Schritt des Anhebens von Teilen besagter Schicht, die sich ab besagten Bindelinien zu besagten Schnittteilen in besagter einen Richtung erstrecken, ab besagter Trägerbahn folgt, um die Bürstteile zu bilden.

30. Verfahren zur Herstellung eines Reinigungsprodukts nach Anspruch 29, worin besagte Trägerbahn und besagte Schicht thermoplastisches Harz enthalten und die Bindelinien durch Heißverschweißen oder Ultraschall-Schweißen besagter Trägerbahn und besagter Schicht geformt werden.

31. Verfahren zur Herstellung eines Reinigungsprodukts nach Anspruch 28, worin besagte Trägerbahn und besagte Schicht thermoplastisches Harz enthalten und die Bindelinien durch Heißverschweißen oder Ultraschall-Schweißen besagter Trägerbahn und besagter Schicht geformt werden.

32. Verfahren zur Herstellung eines Reinigungsprodukts nach Anspruch 28, worin besagter Schritt des Schneidens mittels einer Trennvorrichtung durchgeführt wird.

33. Verfahren zur Herstellung eines Reinigungsprodukts nach Anspruch 29, worin besagter Schritt des Schneidens mittels einer Trennvorrichtung durchgeführt wird.

34. Verfahren zur Herstellung eines Reinigungsprodukts nach Anspruch 30, worin besagter Schritt des Schneidens mittels einer Trennvorrichtung durchgeführt wird.

35. Verfahren zur Herstellung eines Reinigungsprodukts nach Anspruch 31, worin besagter Schritt des Schneidens mittels einer Trennvorrichtung durchgeführt wird.

36. Verfahren zur Herstellung eines Reinigungsprodukts nach Anspruch 30, worin besagter Schritt des Schneidens mittels Schmelzschneiden mit Wärme oder Ultraschallwellen durchgeführt wird.

37. Verfahren zur Herstellung eines Reinigungsprodukts nach Anspruch 31, worin besagter Schritt des Schneidens mittels Schmelzschneiden mit Wärme oder Ultraschallwellen durchgeführt wird.

38. Verfahren zur Herstellung eines Reinigungsprodukts nach Anspruch 28, worin besagte Schicht aus einem Werg hergestellt ist, das eine Vielheit von Filamenten umfasst, die sich kontinuierlich in der Speiserichtung erstrecken.

39. Verfahren zur Herstellung eines Reinigungsprodukts nach Anspruch 29, worin besagte Schicht aus einem Werg hergestellt ist, das eine Vielheit von Filamenten umfasst, die sich kontinuierlich in der Speiserichtung erstrecken.

40. Verfahren zur Herstellung eines Reinigungsprodukts nach Anspruch 30, worin besagte Schicht aus einem Werg hergestellt ist, das eine Vielheit von Filamenten umfasst, die sich kontinuierlich in der Speiserichtung erstrecken.

41. Verfahren zur Herstellung eines Reinigungsprodukts nach Anspruch 31, worin besagte Schicht aus einem Werg hergestellt ist, das eine Vielheit von Filamenten umfasst, die sich kontinuierlich in der Speiserichtung erstrecken.

## Revendications

1. Un produit de nettoyage comprenant une feuille de base (2) et au moins une couche (3) formée de fibres et/ou de feuilles rectangulaires orientées dans une même direction, cette couche (3) étant placée sur une des faces ou sur les deux faces de cette feuille de base (2) et collée à celle-ci au niveau d'un nombre de lignes de jointure (4) intersectant la direction susmentionnée, cette feuille de base (2) étant en partie découpée avec la couche entre les lignes de jointure (4) pour former un nombre de portions de coupage (5), cette couche se trouvant entre ces lignes de jointure (4) pour former un nombre de portions de découpage (5) de façon à ce qu'un nombre de portions brossantes (6) soient formées au niveau des portions de coupage (5) et que des portions non découpées de cette couche (3) soient formées en portions autres que les portions de coupage (5).

2. Un produit de nettoyage selon la revendication 1, dans lequel les portions de cette couche qui s'étendent de ces lignes de jointure aux portions de coupage dans la direction spécifiée sont relevées en se séparant de la surface de la feuille de base, formant ainsi des portions brossantes.

3. Un produit de nettoyage selon la revendication 2, dans lequel les portions de coupage sont alignées parallèlement aux lignes de jointure pour former une ligne intermittente.

4. Un produit de nettoyage selon la revendication 3, dans lequel les lignes de jointure et lesdites lignes intermittentes des portions de coupage s'étendent obliquement par rapport à la direction susmentionnée.

5. Un produit de nettoyage selon la revendication 4, dans lequel ces lignes de jointure sont symétriques de l'un et l'autre côté d'une ligne centrale du produit de nettoyage.

6. Un produit de nettoyage selon la revendication 5, dans lequel les lignes de jointure sont des lignes de jointure en forme de "V".

7. Un produit de nettoyage selon la revendication 6, dans lequel les lignes de jointure en forme de "V" et les portions de coupage sont formées dans une région centrale de la feuille de nettoyage, dans une direction latitudinale, de façon à ce que cette ligne de jointure et les portions de coupage soient absentes des régions latérales de la feuille de nettoyage dans la direction latitudinale.

8. Un produit de nettoyage selon la revendication 7, dans lequel une longueur de chacune des portions de coupage est plus longue qu'un intervalle entre les portions de coupage adjacentes l'une à l'autre dans chacune des lignes intermittentes.

9. Un produit de nettoyage selon la revendication 1, dans lequel les portions de coupage sont alignées parallèlement aux lignes de jointure pour former une ligne intermittente.

10. Un produit de nettoyage selon la revendication 9, dans lequel les lignes de jointure et les lignes intermittentes des portions de coupage s'étendent obliquement par rapport à la direction en question.

11. Un produit de nettoyage selon la revendication 10, dans lequel les lignes de jointure sont symétriques de chaque côté d'une ligne centrale du produit de nettoyage.

12. Un produit de nettoyage selon la revendication 11, dans lequel les lignes de jointure sont en forme de "V".

13. Un produit de nettoyage selon la revendication 12, dans lequel ces lignes de jointure en forme de "V" et les portions de coupage sont formées dans une région centrale de la feuille de nettoyage, dans une direction latitudinale, de façon à ce que la ligne de jointure et les portions de coupage sont absentes des régions latérales de la feuille de nettoyage dans la direction latitudinale.

14. Un produit de nettoyage selon la revendication 13, dans lequel une longueur de chacune des portions de coupage est plus longue qu'un intervalle entre les portions de coupage adjacentes l'une à l'autre dans chacune des lignes intermittentes.

15. Un produit de nettoyage selon la revendication 1, dans lequel les portions coupantes entre deux lignes de jointure sont situées plus près de l'une de deux lignes de jointure que d'une autre des lignes de jointure.

16. Un produit de nettoyage selon la revendication 2, dans lequel les portions de coupage entre deux lignes de jointure sont situées plus près de l'une des deux lignes de jointure que d'une autre des lignes de jointure.

17. Un produit de nettoyage selon la revendication 9, dans lequel les portions de coupage entre deux lignes de jointure sont situées plus près de l'une de deux lignes de jointure que d'une autre de deux lignes de jointure.

18. Un produit de nettoyage selon la revendication 1, dans lequel chacune des lignes de jointure est une ligne continue.

19. Un produit de nettoyage selon la revendication 1, dans lequel chacune de ce nombre de lignes de jointure est une ligne intermittente.

20. Un produit de nettoyage selon la revendication 1, dans lequel chacune des lignes de jointure est ondulée.

21. Un produit de nettoyage selon la revendication 1, dans lequel la feuille de base et la couche contiennent de la résine thermoplastique et les lignes de jointure sont formées en soudant la feuille de base et la couche.

22. Un produit de nettoyage selon la revendication 1, dans lequel les fibres sont frisées.

23. Un produit de nettoyage selon la revendication 1, dans lequel la distance entre des lignes de jointure adjacentes est de 5 à 50 millimètres.

24. Un produit de nettoyage selon la revendication 1, dans lequel la longueur entre les portions de la couche s'étendant des lignes de jointure aux portions coupantes dans la direction spécifiée est d'au moins 3 millimètres.

25. Un produit de nettoyage selon la revendication 1, dans lequel la couche contient des fibres ayant différentes valeurs denier.

26. Un produit de nettoyage selon la revendication 1, dans lequel, la couche susmentionnée contient un agent huileux.

27. Un produit de nettoyage selon la revendication 26, dans lequel cet agent huileux absorbe la poussière.

28. Un procédé pour la production d'un produit de nettoyage comprenant les étapes suivantes:
faisant passer une feuille de base (2) et au moins une couche (3) comprenant des fibres et/ou des feuilles rectangulaires orientées dans une direction et plaçant cette couche (3) sur au moins une face de cette feuille de base (2);
joignant cette feuille de base (2) à cette couche (3) au niveau d'un nombre de lignes de jointure (4) intersectant la direction spécifiée pour obtenir un matériel formé de feuilles;
coupant partiellement ce matériel formé de feuilles entre les lignes de jointure (4) pour former un nombre de portions de coupage (5), formant ainsi un nombre de portions brossantes (6) au niveau des portions coupantes (5), tandis que les autres portions du matériel formé de feuilles restent non-découpées; et
détachant ce matériel formé de feuilles pour obtenir un produit de nettoyage.

29. Un procédé pour la production d'un produit de nettoyage selon la revendication 28, dans lequel l'étape de coupage est suivie par celle de relever des portions de cette couche s'étendant des lignes de jointure aux portions de coupage dans la direction spécifiée, exceptant la feuille de base, pour former les portions brossantes.

30. Un procédé pour la production d'un produit de nettoyage selon la revendication 29, dans lequel la feuille de base et la couche contiennent une résine thermoplastique et les lignes de jointure sont formées par thermosoudure ou soudage par ultrasons de la feuille de base et la couche.

31. Un procédé pour la production d'un produit de nettoyage selon la revendication 28, dans lequel la feuille de base et la couche contiennent une résine thermoplastique et les lignes de jointure sont formées par thermosoudure ou soudage par ultrasons de la feuille de base et la couche.

32. Un procédé pour la production d'un produit de nettoyage selon la revendication 28, dans lequel l'étape de découpage se fait à l'aide d'un outil de coupe.

33. Un procédé pour la production d'un produit de nettoyage selon la revendication 29, dans lequel l'étape de découpage se fait à l'aide d'un outil de coupe.

34. Un procédé pour la production d'un produit de nettoyage selon la revendication 30, dans lequel l'étape de découpage se fait à l'aide d'un outil de coupe.

35. Un procédé pour la production d'un produit de nettoyage selon la revendication 31, dans lequel l'étape de découpage se fait à l'aide d'un outil de coupe.

36. Un procédé pour la production d'un produit de nettoyage selon la revendication 30, dans lequel cette étape de découpage est effectuée au moyen de coupe par fusion thermique ou ultrasonique.

37. Un procédé pour la production d'un produit de nettoyage selon la revendication 31, dans lequel cette étape de découpage est effectuée au moyen de coupe par fusion thermique ou ultrasonique.

38. Un procédé pour la production d'un produit de nettoyage selon la revendication 28, dans lequel cette couche est faite d'étoupe comprenant un nombre de filaments s'étendant d'une façon continue dans la direction de l'alimentation.

39. Un procédé pour la production d'un produit de nettoyage selon la revendication 29, dans lequel cette couche est faite d'étoupe comprenant un nombre de filaments s'étendant d'une façon continue dans la direction de l'alimentation.

40. Un procédé pour la production d'un produit de nettoyage selon la revendication 30, dans lequel cette couche est faite d'étoupe comprenant un nombre de filaments s'étendant d'une façon continue dans la direction de l'alimentation.

41. Un procédé pour la production d'un produit de nettoyage selon la revendication 31, dans lequel cette couche est faite d'étoupe comprenant un nombre de filaments s'étendant d'une façon continue dans la direction de l'alimentation.
